# EUROPEAN PATENT APPLICATION

(11) **EP 4 592 604 A1**
(43) Date of publication of application: **30.07.2025**
(21) Application number: 23890235.7
(22) Date of filing: 30.06.2023
(51) Int. Cl.: F24F 1/32, F24F 11/36, F24F 11/61, F24F 11/64, F24F 11/65, F24F 11/84, F24F 11/86, F25B 41/325, F25B 49/02

(54) **AIR CONDITIONING SYSTEM, AND CONTROL METHOD THEREFOR**

(30) Priority: 14.11.2022 CN 202211427196
(71) Applicant: Qingdao Hisense Hitachi Air-Conditioning Systems Co., Ltd., Qingdao, Shandong 266555 (CN)
(72) Inventor: JING, Xu, Qingdao, Shandong 266555 (CN); GUO, Xiaohui, Qingdao, Shandong 266555 (CN); ZHANG, Heng, Qingdao, Shandong 266555 (CN); CHE, Yanjin, Qingdao, Shandong 266555 (CN); LIU, Xinyi, Qingdao, Shandong 266555 (CN)
(74) Representative: Winter, Brandl - Partnerschaft mbB
(86) International application number: PCT/CN2023/105122
(87) International publication number: WO 2024/103793

(57) **Abstract**

An air conditioning system (100) and a control method therefor. The air conditioning system (100) comprises an indoor unit (10), an outdoor unit (20), a first expansion valve (101), a second expansion valve (102) and a controller (40). The indoor unit (10) comprises an indoor heat exchanger (11) and an indoor expansion valve (12). The outdoor unit (20) comprises a compressor (22). The first expansion valve (101) is configured to control connection or disconnection of a refrigerant gas pipe (31). The second expansion valve (102) is configured to control connection or disconnection of a refrigerant liquid pipe (32). The controller (40) is configured in such a way that when a refrigerant leakage occurring indoors is obtained, the controller controls the air conditioning system (100) to be switched to a cooling mode, controls the indoor expansion valve (12) and the second expansion valve (102) to be closed and controls the first expansion valve (101) to be opened; if it is determined that the compressor (22) satisfies a first preset condition, the controller controls the compressor (22) to be stopped and controls the first expansion valve (101) to be closed; after controlling the compressor (22) to be stopped, if it is determined that the refrigerant leakage continues indoors, the controller controls the compressor (22) to be started and controls the first expansion valve (101) and the indoor expansion valve (12) to be opened; and if it is determined that the compressor (22) satisfies the first preset condition, the controller controls the compressor (22) to be stopped and controls the first expansion valve (101) to be closed.

## Description

The present application claims priority to Chinese Patent Application No. 202211427196.3, filed on November 14, 2022, which is incorporated herein by reference in its entirety.

### TECHNICAL FIELD

The present disclosure relates to the field of air conditioning technology, and in particular, to an air conditioning system and a control method therefor.

### BACKGROUND

Based on people's demand for apparent temperature comfort, air conditioners come into thousands of households and become an indispensable electric appliance in people's daily lives. In the operation process of the air conditioners, refrigerant needs to be circulated in a refrigerant circulation pipeline between an outdoor unit and an indoor unit.

### SUMMARY

In one aspect, an air conditioning system is provided. The air conditioning system includes an indoor unit, an outdoor unit, a first expansion valve, a second expansion valve and a controller. The indoor unit includes an indoor heat exchanger and an indoor expansion valve. The outdoor unit includes a compressor. The indoor unit is connected to the outdoor unit by a gas refrigerant pipe and a liquid refrigerant pipe, respectively. The first expansion valve is disposed on the gas refrigerant pipe between the indoor heat exchanger and the outdoor unit, and is configured to control connection or disconnection of the gas refrigerant pipe between the indoor heat exchanger and the outdoor unit. The second expansion valve is disposed on the liquid refrigerant pipe between the outdoor unit and the indoor expansion valve, and is configured to control connection or disconnection of the liquid refrigerant pipe between the outdoor unit and the indoor expansion valve. The controller is configured to: control the air conditioning system to operate in a cooling mode, control the indoor expansion valve and the second expansion valve to be closed and control the first expansion valve to be opened, when information indicating that a refrigerant leakage occurs indoors is acquired, control the compressor to be stopped and control the first expansion valve to be closed, if the controller determines that the compressor satisfies a first preset condition, control the compressor to be started and control the first expansion valve and the indoor expansion valve to be opened, if the controller determines that the refrigerant leakage continues indoors after controlling the compressor to be stopped, and control the compressor to be stopped and control the first expansion valve to be closed, if the controller determines that the compressor satisfies the first preset condition.

In another aspect, a control method for an air conditioning system is provided. The air conditioning system includes an indoor unit, an outdoor unit, a first expansion valve, a second expansion valve and a controller. The indoor unit includes an indoor heat exchanger and an indoor expansion valve. The outdoor unit includes a compressor. The indoor unit is connected to the outdoor unit by a gas refrigerant pipe and a liquid refrigerant pipe, respectively; and the first expansion valve is disposed on the gas refrigerant pipe between the indoor heat exchanger and the outdoor unit, and is configured to control connection or disconnection of the gas refrigerant pipe between the indoor heat exchanger and the outdoor unit. The second expansion valve is disposed on the liquid refrigerant pipe between the outdoor unit and the indoor expansion valve, and is configured to control connection or disconnection of the liquid refrigerant pipe between the outdoor unit and the indoor expansion valve. The refrigerant concentration sensor is configured to detect a concentration of refrigerant indoors. The controller is coupled to the indoor heat exchanger, the outdoor heat exchanger, the compressor, the first expansion valve, the second expansion valve and the refrigerant concentration sensor.

The control method comprises: controlling the air conditioning system to operate in a cooling mode, control the indoor expansion valve and the second expansion valve to be closed and control the first expansion valve to be opened, when information indicating that a refrigerant leakage occurs indoors is acquired; controlling the compressor to be stopped and controlling the first expansion valve to be closed, if determining that the compressor satisfies a first preset condition, starting the compressor and opening the first expansion valve and the indoor expansion valve, if determining that the refrigerant leakage continues indoors after controlling the compressor to be stopped; and controlling the compressor to be stopped and closing the first expansion valve, if determining that the compressor satisfies the first preset condition. Before acquiring the information that the refrigerant leakage occurs indoors, the controller is further configured to: acquire the concentration of refrigerant indoors at a current moment and at a previous moment, and to determine that the refrigerant leakage occurs indoors, if it is determined that the concentration of refrigerant at the current moment is greater than the concentration of refrigerant at the previous moment.

### BRIEF DESCRIPTION OF THE DRAWINGS

FIG. 1 is a perspective view of an air conditioning system according to some embodiments.
FIG. 2 is a schematic view of an air conditioning system according to some embodiments.
FIG. 3 is a block diagram of an air conditioning system according to some embodiments.
FIG. 4 is another schematic view of an air conditioning system according to some embodiments.
FIG. 5 is another block diagram of an air conditioning system according to some embodiments.
FIG. 6 is a schematic diagram of a cycle of an air conditioning system in a cooling mode, according to some embodiments.
FIG. 7 is a flowchart of a refrigerant recovery method for an air conditioning system according to some embodiments.
FIG. 8 is a flowchart of another refrigerant recovery method for an air conditioning system according to some embodiments.
FIG. 9 is a flowchart of still another refrigerant recovery method for an air conditioning system according to some embodiments.
FIG. 10 is a schematic diagram of an open/close state of each component in an air conditioning system according to some embodiments.
FIG. 11 is a schematic diagram of an open/close state of each component in another air conditioning system according to some embodiments.

### DETAILED DESCRIPTION

Some embodiments of the present disclosure will be clearly and completely described in the following with reference to the accompanying drawings. Obviously, the described embodiments are only a part rather than all of the embodiments of the present disclosure. All other embodiments obtained by a person of ordinary skill in the art based on the embodiments provided in the present disclosure shall belong to the scope of protection of the present disclosure.

Unless the context requires otherwise, throughout the description and claims, the term "comprise" and other forms, such as, the third-person singular form "comprises" and the present participle form "comprising" are to be construed in an inclusive sense, that is, "including, but not limited to". In the description of the description, the terms "one embodiment", "some embodiments", "exemplary embodiments", "example", "specific example" or "some examples" and the like are intended to indicate that a particular feature, structure, material, or characteristic associated with the embodiment or example is included in at least one embodiment or example of the present disclosure. The schematic representation of the above terms does not necessarily refer to the same embodiment or example. Furthermore, the particular feature, structure, material, or characteristic may be included in any suitable manner in any one or more embodiments or examples.

Hereinafter, the terms "first" and "second" are only used for descriptive purposes, and cannot be understood as indicating or implying relative importance or implicitly indicating the number of indicated technical features. Thus, the features defined by "first" and "second" may explicitly or implicitly include one or more of the features. In the description of the embodiments of the present disclosure, "a plurality of" means two or more than two, unless otherwise specified.

In describing some embodiments, expressions "coupled" and "connected", along with their derivatives, may be used. The term "connection" should be understood broadly, for example, "connection" may be fixed connection, detachable connection, or integral connection; and may also be direct connections or indirect connections via intervening structures. The term "coupled" indicates, for example, that two or more components are in direct physical or electrical contact. The term "coupled" or "communicatively coupled" may also mean that two or more components are not in direct contact with each other, but yet still co-operate or interact with each other. The embodiments disclosed herein are not necessarily limited to the disclosure herein.

"A and/or B" comprises the following three combinations: A only, B only, and A and B in combination.

The use of "adapted to" or "configured to" herein means open and inclusive language that does not exclude devices adapted to or configured to perform additional tasks or steps.

In addition, the use of "based on" means open and inclusive, in that a process, step, calculation, or other action of 'based on' one or more of the stated conditions or values may in practice be based on additional conditions or exceeding the stated values.

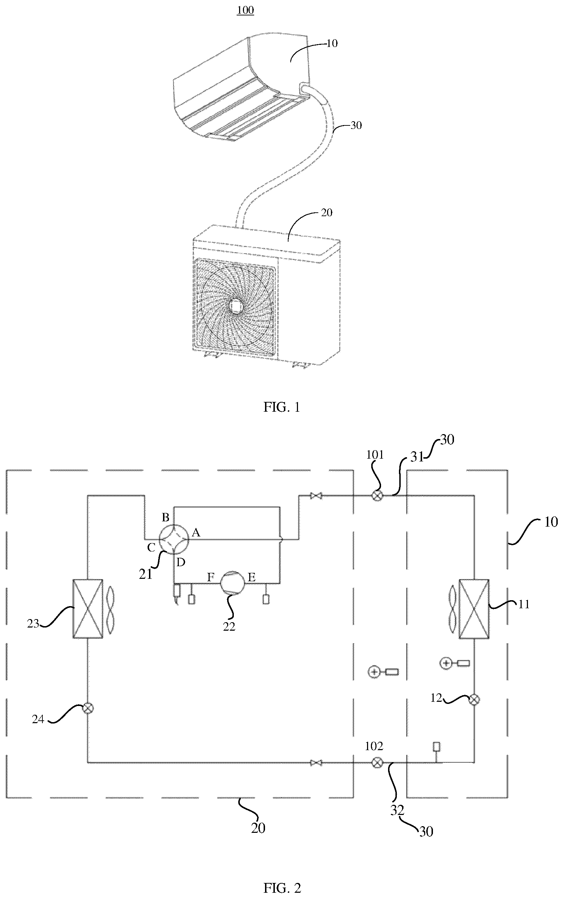

FIG. 1 is a perspective view of an air conditioning system according to some embodiments. As shown in FIG. 1, an air conditioning system 100 includes an indoor unit 10, an outdoor unit 20 and a refrigerant pipeline 30.

The refrigerant pipeline 30 may also be referred to as circulation pipeline, and the indoor unit 10 and the outdoor unit 20 are connected by means of a refrigerant pipeline 30 to form a circulation loop.

FIG. 2 is a schematic diagram of an air conditioning system according to some embodiments. As shown in FIG. 2, the air conditioning system 100 further includes a first expansion valve 101 and a second expansion valve 102.

The indoor unit 10, the second expansion valve 102, the outdoor unit 20 and the first expansion valve 101 are in sequentially connected in series by means of the refrigerant pipeline 30.

The indoor unit 10 includes an indoor heat exchanger 11 and an indoor expansion valve 12.

The first expansion valve 101, the indoor heat exchanger 11, the indoor expansion valve 12, and the second expansion valve 102 are sequentially connected in series by means of the refrigerant pipeline 30.

The outdoor unit 20 includes a four-way valve 21, a compressor 22, an outdoor heat exchanger 23 and an outdoor expansion valve 24.

The compressor 22 includes a suction port E and an exhaust port F. The compressor 22 is configured to suck in a low-temperature and low-pressure gas-phase refrigerant from the suction port E, drive a piston to compress the gas-phase refrigerant in the low-temperature and low-pressure state by means of the operation of the motor, and then exhaust a high-temperature and high-pressure gas-phase refrigerant through the exhaust port F, so that the compressor 22 can provide power for a cooling cycle. It should be understood that the suction port E of the compressor 22 is on a low-pressure side, and the exhaust port F of the compressor 22 is on a high-pressure side.

The indoor heat exchanger 11 performs heat exchange between indoor air and the refrigerant transferred in the indoor heat exchanger 11, so as to liquefy or vaporize the refrigerant. The outdoor heat exchanger 23 is configured to perform heat exchange between outdoor air and the refrigerant transferred in the outdoor heat exchanger 23, so as to liquefy or vaporize the refrigerant.

The indoor expansion valve 12 and the outdoor expansion valve 24 are configured to regulate a flow rate of refrigerant in pipelines of the air conditioning system 100.

The compressor 22, a condenser (the indoor heat exchanger 11 or the outdoor heat exchanger 23), expansion valves (the indoor expansion valve 12 and the outdoor expansion valve 24), and an evaporator (the outdoor heat exchanger 23 or the indoor heat exchanger 11) perform the refrigerant circulation of the air conditioning system 100. The refrigerant circulation comprises a series of processes, involving compression, condensation, expansion and evaporation, and the supply of the refrigerant to the regulated side in a circulation manner.

The four-way valve 21 comprises a first port A, a second port B, a third port C and a fourth port D.

The first port A of the four-way valve 21 is connected to the first expansion valve 101, a second port B is connected to the suction port E of the compressor 22, a third port C is connected to the outdoor heat exchanger 23, and a fourth port D is connected to the exhaust port F of the compressor 22.

The refrigerant pipeline 30 includes a gas refrigerant pipe 31 and a liquid refrigerant pipe 32, and the indoor unit 10 and the outdoor unit 20 are respectively connected by means of the gas refrigerant pipe 31 and the liquid refrigerant pipe 32.

The first expansion valve 101 is disposed on the refrigerant pipe 31 between an end of the indoor heat exchanger 11 away from the indoor expansion valve 12 and the outdoor unit 20, and is configured to be opened when the refrigerant leakage occurs indoors, so that the refrigerant leaked from the indoor unit is recovered to the outdoor unit, and is closed after the refrigerant is recovered, so as to prevent the refrigerant in the outdoor unit from being recovered back to the indoor unit. The second expansion valve 102 is disposed on a liquid refrigerant pipe 32 between the outdoor unit 20 and the indoor expansion valve 12, and is configured to be closed when the refrigerant leakage occurs indoors so as to prevent the refrigerant of the outdoor unit 20 from continuing to flow to the indoor unit 10, and is configured to seal the liquid refrigerant pipe between the second expansion valve 102 and the indoor expansion valve 12 so as to store the refrigerant between the second expansion valve 102 and the indoor expansion valve 12. In some embodiments of the present disclosure, the first expansion valve 101, the second expansion valve 102 and the indoor expansion valve 12 are electronic expansion valves.

In some embodiments of the present disclosure, the operation mode of the air conditioning system 100 includes a cooling mode and a heating mode.

For example, when the air conditioning system 100 operates in a heating mode, the first expansion valve 101, the indoor expansion valve 12, the second expansion valve 102 and the outdoor expansion valve 24 are opened, the first port A of the four-way valve 21 is connected to the fourth port D, and the second port B is connected to the third port C. In this case, the indoor heat exchanger 11 serves as a condenser, and the outdoor heat exchanger 23 serves as an evaporator.

The gas-phase refrigerant in the low-temperature and low-pressure state is compressed by means of the compressor 22 to become a high-temperature and high-pressure gas-phase refrigerant, and the high-temperature and high-pressure gas-phase refrigerant flows into the indoor heat exchanger 11 through the four-way valve 21. The indoor heat exchanger 11 condenses the high-temperature and high-pressure gas-phase refrigerant into a liquid-phase refrigerant in a high-pressure state, and the heat is released to the surrounding environment during the condensation process. The indoor expansion valve 12 and the outdoor expansion valve 24 throttle and depressurize the liquid-phase refrigerant in a high-pressure state to become a gas-liquid two-phase refrigerant in a low-pressure state. The outdoor heat exchanger 23 absorbs heat from the surrounding environment and evaporates the gas-liquid two-phase refrigerant in the low-pressure state to form a low-temperature and low-pressure gas-phase refrigerant. The gas-phase refrigerant in a low temperature and a low pressure state returns to the compressor 22 by means of the four-way valve 21 to form a heating cycle.

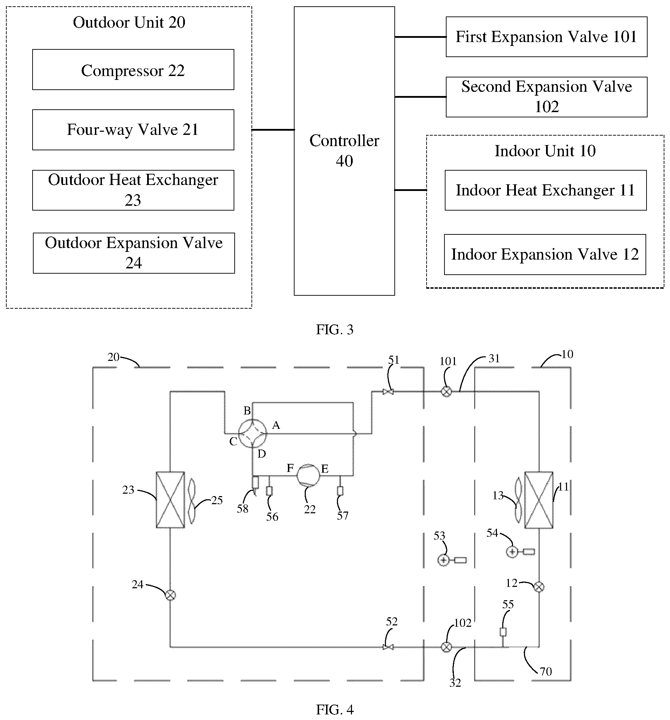

FIG. 3 is a block diagram of an air conditioning system according to some embodiments. As shown in FIG. 3, an air conditioning system 100 further includes a controller 40.

In some embodiments of the present disclosure, the controller 40 refers to an apparatus that can generate an operation control signal according to an instruction operation code and a time sequence signal and instruct the air conditioning system 100 to perform a control instruction. The controller 40 is coupled to each component inside the air conditioning system 100 and is configured to control the operation of each component inside the air conditioning system 100, so that each component of the air conditioning system 100 operates so as to achieve each predetermined function of the air conditioning system 100.

For example, the controller 40 is configured in such a way: if it is determined that the compressor 22 satisfies a first preset condition, the controller controls the compressor 22 to be stopped and controls the first expansion valve 101 to be closed. After the compressor 22 is controlled to be stopped, it is determined whether the refrigerant leakage continues indoors, and if the leakage does not occur, it is confirmed that a leakage point is located between the indoor expansion valve 12 and the first expansion valve 101, and at this time, the refrigerant at the leakage point has been recovered. If the refrigerant leakage continues occurring, it is determined that the leakage point is located between the indoor expansion valve 12 and the second expansion valve 102, the controller controls the compressor 22 to be started and controls the first expansion valve 101 and the indoor expansion valve 12 to be opened, so as to recover the refrigerant between the indoor expansion valve 12 and the second expansion valve 102. And if it is determined that the compressor 22 satisfies the first preset condition, the controller controls the compressor 22 to be stopped and controls the first expansion valve 101 to be closed, and the recovery of refrigerant at the indoor unit 10 is completed.

FIG. 4 is another schematic diagram of an air conditioning system according to some embodiments. Different from the air conditioning system 100 in FIG. 2, as shown in FIG. 4, the air conditioning system 100 further includes a first cut-off valve 51, a second cut-off valve 52, a first refrigerant concentration sensor 53, a second refrigerant concentration sensor 54, a first pressure sensor 55, a second pressure sensor 56, a third pressure sensor 57 and a temperature sensor 58. The indoor unit 10 further includes an indoor fan assembly 13, and the outdoor unit 20 further includes outdoor fan assembly 25.

The first cut-off valve 51 is disposed on the gas refrigerant pipe 31 and configured to control connection or disconnection of the gas refrigerant pipe 31, and the second cut-off valve 52 is disposed on the liquid refrigerant pipe 32 and configured to control connection or disconnection of the liquid refrigerant pipe 32.

In some embodiments of the present disclosure, the first refrigerant concentration sensor 53 is disposed indoors and configured to detect a concentration of refrigerant indoors. The second refrigerant concentration sensor 54 is provided in the indoor unit 10 and configured to detect a concentration of refrigerant in the indoor unit 10.

A first pressure sensor 55 is arranged between the indoor expansion valve 12 and the second expansion valve 102, and is configured to detect a pressure value at a connection pipe 70 between the indoor expansion valve 12 and the second expansion valve 102. The second pressure sensor 56 is provided at the exhaust port F of the compressor 22, and is configured to detect an exhaust pressure value of the compressor 22. The third pressure sensor 57 is provided at the suction port E of the compressor 22 and is configured to detect a suction pressure value of the compressor 22.

A temperature sensor 58 is provided at the exhaust port F of the compressor 22 and is configured to detect an exhaust temperature value of the compressor 22.

The indoor fan assembly 13 generates an airflow of indoor air passing through the indoor heat exchanger 11, and is configured to promote heat exchange between the refrigerant flowing in a heat transfer pipe of the indoor heat exchanger 11 and the indoor air, so as to assist temperature regulation. The outdoor fan assembly 25 generates an air flow of outdoor air passing through the outdoor heat exchanger 23, and is configured to promote heat exchange between the refrigerant flowing in the heat transfer pipe of the outdoor heat exchanger 23 and the outdoor air.

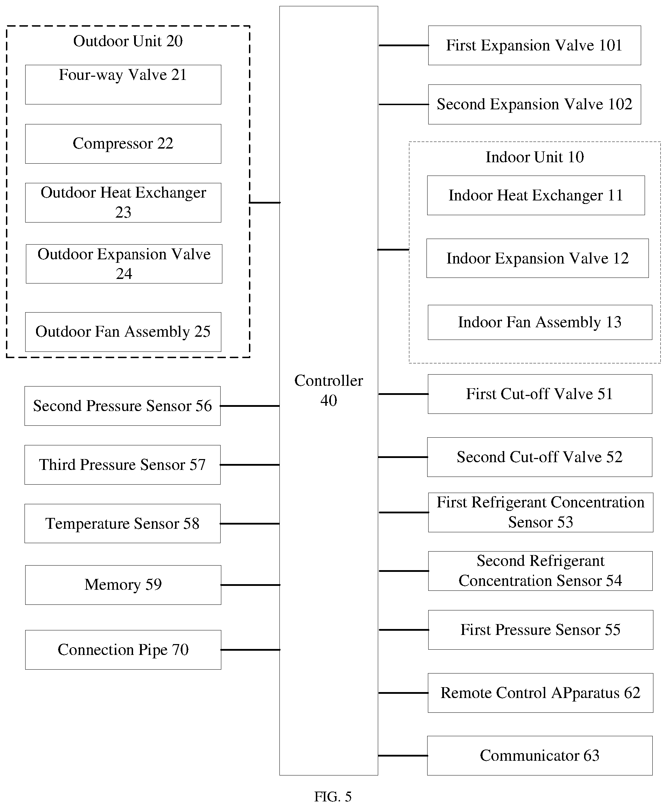

FIG. 5 is another block diagram of an air conditioning system according to some embodiments. Different from the air conditioning system 100 in FIG. 3, as shown in FIG. 5, the air conditioning system 100 further includes a first cut-off valve 51, a second cut-off valve 52, a first refrigerant concentration sensor 53, a second refrigerant concentration sensor 54, a first pressure sensor 55, a second pressure sensor 56, a third pressure sensor 57 and a temperature sensor 58. The indoor unit 10 further includes an indoor fan assembly 13, and the outdoor unit 20 further includes outdoor fan assembly 25.

In some embodiments of the present disclosure, the air conditioning system 100 includes a memory 59. The memory 59 is coupled to the controller 40.

In some embodiments, the memory 59 is configured to store software programs and data. The controller 40 executes various functions and data processing of the air conditioning system 100 by performing a software program or data stored in the memory 59. The memory 59 in some embodiments of the present disclosure may store an operation system and various application programs, and may also store codes for performing the method for recovering refrigerant of the air conditioning system 100 provided in some embodiments of the present disclosure.

As shown in FIG. 5, in some embodiments of the present disclosure, the indoor unit 10 can further include a remote control apparatus 62 (for example, a remote controller), the remote control apparatus 62 is coupled to the controller 40, and the remote control apparatus 62 has a function of being in communication with the controller 40, for example, by using infrared rays or other communication manners. A user may control the air conditioning system 100 by using the remote control apparatus 62, so as to implement interaction between the user and the air conditioning system 100.

In some embodiments, as shown in FIG. 5, the air conditioning system 100 can further include a communicator 63. The communicator 63 is electrically connected to the controller 40 and is configured to establish a communication connection with the server. The communicator 63 may include a radio frequency (RF) module, a cellular module, a wireless fidelity (WIFI) module, a GPS module, etc.

In some embodiments, the air conditioning system 100 may also send its own operation data to the server through the communicator 63, so that the server calculates, according to the data of the air conditioning system 100, operation parameters of each component of the air conditioning system 100 in a working process, and then sends the calculated operation parameters to the air conditioning system 100. The controller 40 controls each component in the air conditioning system 100 to work according to the operation parameters calculated by the server.

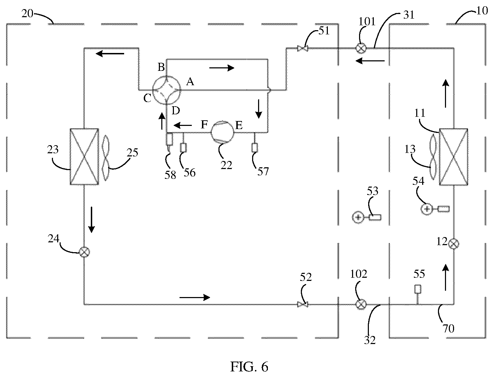

FIG. 6 is a schematic diagram of a circulation of an air conditioning system in a cooling mode according to some embodiments. As shown in FIG. 6, when the air conditioning system 100 operates in a cooling mode, a first expansion valve 101, an indoor expansion valve 12, a second expansion valve 102 and an outdoor expansion valve 24 are opened, a first port A of a four-way valve 21 is connected to a second port B, and a third port C is connected to a fourth port D. In this case, the outdoor heat exchanger 23 serves as a condenser, and the indoor heat exchanger 11 serves as an evaporator.

The high-temperature and high-pressure gas-phase refrigerant discharged from the compressor 22 flows into the outdoor heat exchanger 23 via the four-way valve 21. The outdoor heat exchanger 23 condenses the high-temperature and high-pressure gas-phase refrigerant into the supercooled liquid-phase refrigerant in a medium-temperature and high-pressure state. The second expansion valve 102 and the indoor expansion valve 12 change the medium-temperature and high-pressure supercooled liquid refrigerant into a low-temperature and low-pressure gas-liquid two-phase refrigerant after subjected to throttle and depressurize. The indoor heat exchanger 11 absorbs heat from the surrounding environment and evaporates a low-temperature and low-pressure gas-liquid two-phase refrigerant to form a low-temperature and low-pressure gas-phase refrigerant. After passing through the four-way valve 21, the low-temperature and low-pressure gas-phase refrigerant returns to the compressor 22 to form a cooling cycle. The arrow in FIG. 6 indicates a direction representing a flow direction of the refrigerant when the air conditioning system 100 is in the cooling mode.

During the operation of the air conditioning system 100, the refrigerant is present in the indoor unit 10, the outdoor unit 20 and the connection pipe 70. When the connection pipe 70 is long in length, and the refrigerant leakage is detected indoors, the refrigerant in the connection pipe 70 and the indoor unit 10 needs to be completely recovered. Due to the large retention amount of refrigerant in the connection pipe 70, the refrigerant cannot be completely recovered. If the refrigerant in the connection pipe 70 is not recovered in time and leaks from the connection pipe 70 to the indoor side, the concentration of the refrigerant indoors tends to be too high, and there is a flammable region, thus causing potential troubles.

To solve the foregoing problem, some embodiments of the present disclosure provide a refrigerant recovery method for an air conditioning system. The method is applied to a controller 40.

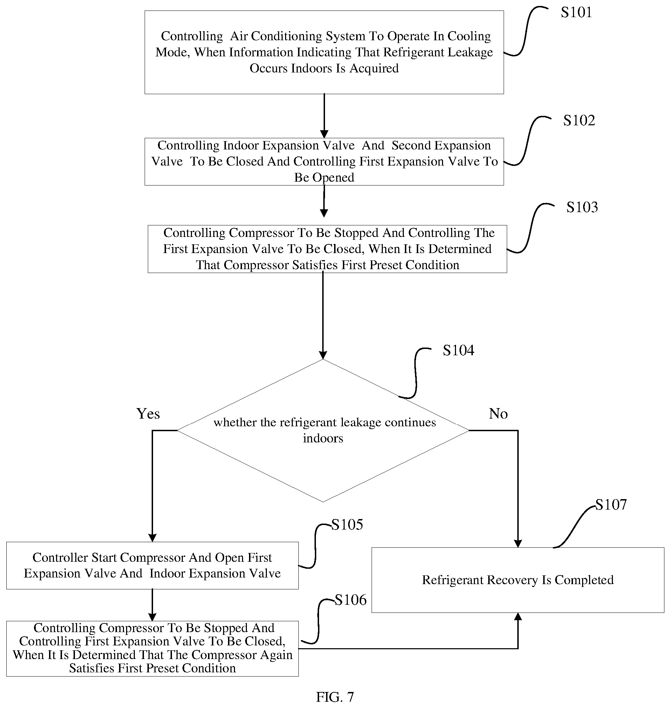

FIG. 7 is a flowchart of a refrigerant recovery method for an air conditioning system according to some embodiments. As shown in FIG. 7, in some embodiments of the present disclosure, the method may include steps S101 to S107.

In S101, when information indicating that refrigerant leakage occurs indoors is acquired, controlling the air conditioning system 100 to operate in a cooling mode.

In S102, controlling the indoor expansion valve 12 and the second expansion valve 102 to be closed and controlling the first expansion valve 101 to be opened.

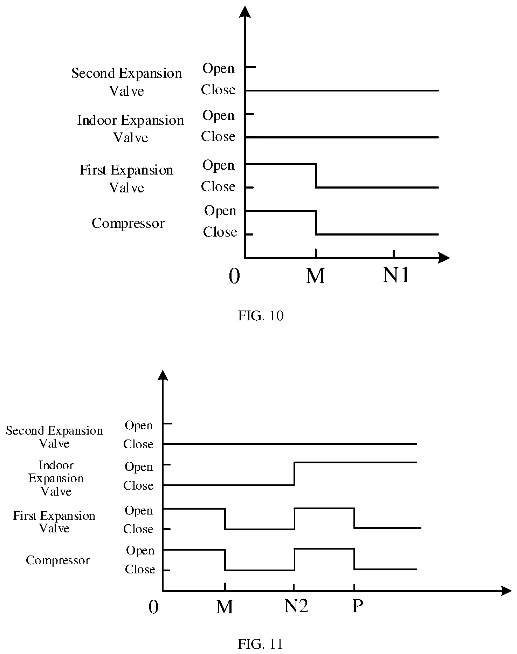

When acquiring the information indicating that the refrigerant leaks indoors, the controller 40 controls the air conditioning system 100 to be in the point-0 state shown in FIG. 10. At this time, the indoor expansion valve 12 and the second expansion valve 102 are closed, and the compressor 22 and the first expansion valve 101 are opened.

As shown in FIG. 6, because the air conditioning system 100 operates in the cooling mode, the high-temperature and high-pressure gas-phase refrigerant flowing out from the compressor 22 flows into the outdoor heat exchanger 23 and cannot flow towards the indoor unit 10 anymore. Since both the indoor expansion valve 12 and the second expansion valve 102 are both in a closed state, at this time, the refrigerant between indoor expansion valve 12 and second expansion valve 102 does not flow any more, and the refrigerant between the indoor expansion valve 12 and the first expansion valve 101 flows towards outdoor unit 20.

In some embodiments of the present disclosure, since the indoor expansion valve 12, the second expansion valve 102 and the first expansion valve 101 are all electronic expansion valves, the controller 40 may adjust the opening of the indoor expansion valve 12 and the second expansion valve 102 to a fully closed state, that is, the opening of the indoor expansion valve 12 and the second expansion valve 102 are both 0 pls. In this way, the refrigerant pipeline between the indoor expansion valve 12 and the second expansion valve 102 is a closed pipeline, and may store the refrigerant in the refrigerant pipeline between the indoor expansion valve 12 and the second expansion valve 102.

The pls is the abbreviation for pulse, which refers to a pulse and is an opening unit of the electronic expansion valve.

In some embodiments of the present disclosure, for example, the controller 40 may adjust the opening of the first expansion valve 101 to a fully open state. In this way, the maximum flowing area of the refrigerant in the gas refrigerant pipe 31 may be achieved, the fastest recovery of the refrigerant may be achieved, and the time for recovering the refrigerant may be reduced.

In some embodiments of the present disclosure, when the controller 40 controls the indoor expansion valve 12 and the second expansion valve 102 to be closed, and controls the indoor fan assembly 13 to be turned on, in order to evaporate the liquid-phase refrigerant at the indoor unit 10 into a gas-phase refrigerant as far as possible. In this way, the liquid-phase refrigerant entering the compressor may be prevented from causing a liquid strike phenomenon (i.e., insufficient evaporation of the liquid-phase refrigerant in the outdoor unit 20 causes non-evaporated liquid-phase refrigerant to flow into the compressor 22), thereby affecting the reliability of the compressor 22. In this way, the heat exchange efficiency between the indoor heat exchanger 11 and the indoor air may be increased, thereby improving the flow rate of refrigerant between the indoor heat exchanger 11 and the indoor expansion valve 12, reducing the time for recovering the refrigerant, and thus reducing the leakage amount of the refrigerant.

In some embodiments of the present disclosure, the controller 40 may control the indoor fan assembly 13 to operate at a first preset speed, in which the first preset speed is a speed preset by the air conditioning system 100. The first preset speed is, for example, a highest speed that the indoor fan assembly 13 can reach, that is, a speed where the indoor fan assembly 13 provides the largest amount of air output per unit time. In this way, the heat exchange efficiency between the indoor heat exchanger 11 and the indoor air is increased, the speed at which the liquid-phase refrigerant is evaporated into a gas-phase refrigerant in the indoor heat exchanger 11 can be accelerated, the refrigerant can be recovered quickly, and the leakage amount of the refrigerant is reduced.

In other embodiments of the present disclosure, when controlling the indoor expansion valve 12 and the second expansion valve 102 to be closed, the controller 40 may further control the outdoor fan assembly 25 to be opened, so that the refrigerant recovered in the refrigerant pipe 31 between the compressor 22 and the outdoor heat exchanger 23 flows to the liquid refrigerant pipe 32 between the outdoor heat exchanger 23 and the second expansion valve 102.

In some embodiments of the present disclosure, the controller 40 may control the outdoor fan assembly 25 to operate at a second preset speed, in which the second preset speed is a mode preset by the air conditioning system 100. The second preset speed is, for example, a highest speed that the outdoor fan assembly 25 can reach, that is, a speed where the outdoor fan assembly 25 provides the largest amount of air output per unit time. In this way, the heat exchange efficiency between the outdoor heat exchanger 23 and the outdoor air is increased, the speed at which the gas-phase refrigerant is condensed into the liquid-phase refrigerant in the outdoor heat exchanger 23 can be accelerated, the large pressure changes of the refrigerant pipeline between the compressor 22 and the outdoor heat exchanger 23 during refrigerant recovery can be avoided, and the air conditioning system 100 can be ensured to operate normally.

In step S103, when it is determined that the compressor 22 satisfies a first preset condition, controlling the compressor 22 to be stopped and controlling the first expansion valve 101 to be closed.

In some embodiments of the present disclosure, when the compressor 22 satisfies the first preset condition, the controller 40 determines that the refrigerant in the indoor unit 10 flows into the outdoor unit 20 through the gas refrigerant pipe 31, that is, the refrigerant recovery may end. In this case, the controller 40 controls the air conditioning system 100 to be in the M-point state in FIG. 10, at this time, the indoor expansion valve 12 and the second expansion valve 102 are still in a closed state, and the controller 40 controls the compressor 22 to be stopped and controls the first expansion valve 101 to be closed so as to disconnect the indoor unit 10 from the outdoor unit 20, thereby preventing the refrigerant at the outdoor unit 20 from flowing back to the indoor unit 10 through the gas refrigerant pipe 31.

The controller 40 may adjust the first expansion valve 101 to the fully closed state, that is, the opening of the first expansion valve 101 is adjusted to 0 Pls.

The first preset condition may include at least one of the following.

First, the operation time of the compressor 22 after being switched to the cooling mode is greater than a preset time.

When the preset time is that the refrigerant in the indoor unit 10 flows into the outdoor unit 20, the content of refrigerant in the indoor unit 10 is lower than the first preset threshold value, and the compressor 22 is switched to the cooling mode during operation. In some embodiments of the present disclosure, the preset time is a time set in advance, for example, 20 min or 25 min.

It should be noted that, when the content of refrigerant in the indoor unit 10 is lower than the first preset threshold value, it indicates that the refrigerant recovery in the indoor unit 10 is completed. Therefore, if the controller 40 determines that the operation time of the compressor 22 after being switched to the cooling mode is greater than the preset time, it may be determined that the refrigerant in the indoor unit 10 flows into the outdoor unit 20 through the gas refrigerant pipe 31 at this time, and the refrigerant recovery ends.

For example, if the preset time is 20 min, the controller 40 controls the compressor 22 to stop operating and controls the first expansion valve 101 to be closed after the compressor 22 is switched to the cooling mode for operating for 20 min.

It should be understood that, if it is determined that the air conditioning system 100 does not operate in the cooling mode before refrigerant leakage, the controller 40 switches the operation mode of the air conditioning system 100 to the cooling mode; and if it is determined that the air conditioning system 100 operates in the cooling mode before the refrigerant leakage occurs, the controller 40 does not need to switch the operation mode of the air conditioning system 100.

Second, the exhaust pressure value of the compressor 22 is greater than a first preset value.

The first preset value is an exhaust pressure value of the compressor 22 when the refrigerant in the indoor unit 10 flows into the outdoor unit 20 and the content of refrigerant in the indoor unit 10 is already lower than a first preset threshold value. In some embodiments of the present disclosure, the first preset value is a value set in advance, for example, 3.7 MPa or 3.8 MPa.

If the controller 40 determines that the exhaust pressure value of the compressor 22 is greater than the first preset value, it may be determined that the refrigerant in the indoor unit 10 flows into the outdoor unit 20 through the gas refrigerant pipe 31 at this time, and the refrigerant recovery ends.

For example, if the (current) discharge pressure value of the compressor 22 is 3.8 Mpa and the first preset value is 3.7 Mpa, the controller 40 controls the compressor 22 to stop operating and controls the first expansion valve 101 to be closed.

Third, the exhaust temperature value of the compressor 22 is greater than a second preset value.

The second preset value is an exhaust temperature value of the compressor 22 when the refrigerant in the indoor unit 10 flows into the outdoor unit 20 and the content of refrigerant in the indoor unit 10 is already lower than a first preset threshold value. In some embodiments of the present disclosure, the second preset value is a value set in advance, for example, 105°C, 100°C, etc.

If the controller 40 determines that the exhaust temperature value of the compressor 22 is higher than the second preset value, it may be determined that the refrigerant in the indoor unit 10 flows into the outdoor unit 20 through the gas refrigerant pipe 31 at this time, and the refrigerant recovery ends. For example, if the second preset value is 105°C and the (current) exhaust temperature of the compressor 22 is 108°C, the controller 40 controls the compressor 22 to stop operating and controls the first expansion valve 101 to be closed.

Fourth, the suction pressure value of the compressor 22 is less than a third preset value.

The third preset value is a suction pressure value of the compressor 22 when the refrigerant in the indoor unit 10 flows into the outdoor unit 20 and the content of refrigerant in the indoor unit 10 is already lower than a first preset threshold value. In some embodiments of the present disclosure, the third preset value is a value set in advance, for example, 0.1 Mpa, 0.08 Mpa, etc.

If the controller 40 determines that the suction pressure value of the compressor 22 is lower than the third preset value, it may be determined that the refrigerant in the indoor unit 10 flows into the outdoor unit 20 through the gas refrigerant pipe 31 at this time, and the refrigerant recovery ends.

For example, the third preset value may be 0.1 Mpa, and the (current) suction pressure value of the compressor 22 is 0.08 Mpa, and the controller 40 controls the compressor 22 to stop operating and controls the first expansion valve 101 to be closed.

It can be understood that, when the first preset condition satisfies at least one of the above four determination conditions, the refrigerant recovery can end. The present disclosure does not limit the execution order of the four determination conditions. Whether the corresponding determination condition can be executed depends on the operation state of the air conditioning system 100.

It should be noted that, the preset time, the first preset value, the second preset value, and the third preset value may also be acquired through experiments.

In some embodiments of the present disclosure, after controlling the compressor 22 to be stopped, the controller 40 also controls the outdoor fan assembly 25 to be turned off. In this way, the energy consumption of the air conditioning system 100 can be reduced.

In other embodiments of the present disclosure, the controller 40 controls the indoor fan assembly 13 to be turned off after controlling the compressor 22 to be turned off. In this way, the energy consumption of the air conditioning system 100 can be reduced.

In S104, determining whether the refrigerant leakage continues indoors, if yes, execute S105, and if not, execute S107.

In some embodiments of the present disclosure, S104 can further include: acquiring, by the controller 40, the concentration of refrigerant indoors by using the first refrigerant concentration sensor 53, and determining, by the controller 40, whether the concentration of refrigerant indoors at the current moment is greater than the concentration of refrigerant indoors at the previous moment.

It should be understood that, in some embodiments of the present disclosure, the change of the concentration of refrigerant indoors may indicate whether the refrigerant leakage continues indoors. For example, if the concentration of refrigerant indoors at the current time is greater than the concentration of refrigerant indoors at the previous time, it is indicated that the refrigerant leakage continues indoors. If the concentration of refrigerant indoors at the current time is lower than or equal to the concentration of refrigerant in indoors at the previous time, it is indicated that the refrigerant leakage no longer occurs indoors.

In other embodiments of the present disclosure, S104 includes: acquiring, by the controller 40, through the first pressure sensor 55, pressure values at the connection pipe 70 between the indoor expansion valve 12 and the second expansion valve 102 at the current moment and at the previous moment, and determining whether the pressure value at the connection pipe 70 at the current moment is less than the pressure value at the previous moment.

It can be understood that, the content of refrigerant in the refrigerant pipeline between the indoor expansion valve 12 and the first expansion valve 101 is already lower than the first preset threshold value, and if the refrigerant leakage continues indoors, the leakage point is located at the connection pipe 70. The change of the pressure value at the connection pipe 70 may represent the change of the concentration of refrigerant at the connection pipe 70, and the controller 40 determines whether the refrigerant leakage continues indoors by determining whether the concentration of refrigerant at the connection pipe 70 changes.

For example, if the concentration of refrigerant at the connection pipe 70 is increased, it is indicated that the refrigerant leakage continues at the connection pipe 70. And if the concentration of refrigerant at the connection pipe 70 decreases, it is indicated that the refrigerant leakage at the connection pipe 70 is stopped.

In S105, starting the compressor 22 and opening the first expansion valve 101 and the indoor expansion valve 12.

It can be understood that, when it is determined whether the refrigerant leakage continues indoors, the compressor 22, the first expansion valve 101 and the indoor expansion valve 12 are in a closed state, and after S101 and S102 are completed, the refrigerant between the indoor expansion valve 12 and the first expansion valve 101 is completely recovered, and refrigerant leakage does not occur here any more.

Therefore, when the controller 40 determines that the refrigerant leakage continues indoors, it may be determined that the refrigerant leakage point is located at the connection pipe 70 between the indoor expansion valve 12 and the second expansion valve 102, and the controller 40 controls the air conditioning system 100 to be in the N2-point state shown in FIG. 11. At this time, the second expansion valve 102 is in the closed state, the controller 40 controls the compressor 22 to be started, controls the first expansion valve 101 and the indoor expansion valve 12 to be opened, and controls the refrigerant at the connection pipe 70 to be recovered to the outdoor unit 20 through the indoor expansion valve 12 and the first expansion valve 101. In some embodiments of the present disclosure, the controller 40 may adjust the opening of the first expansion valve 101 to a fully open state, so that the refrigerant pipeline has a better flowing capacity.

After starting the compressor 22, the controller 40 may gradually increase the frequency of the compressor 22 until the operation frequency of the compressor 22 reaches the preset operation frequency, and the compressor 22 continues to operate at the preset operation frequency. In this way, the operation of the compressor 22 can be stabilized, and the service life of the compressor 22 can be extended.

When the air conditioning system 100 operates in the cooling mode, the controller 40 controls the superheat degree of the indoor unit 10 according to the opening of the indoor expansion valve 12, and the preset superheat degree of the indoor unit 10, which is maintained all the time, prevents the compressor 22 from causing the problem of liquid return.

It should be noted that the superheat degree refers to a difference between an actual temperature of the refrigerant at an outlet of the evaporator and a corresponding saturation temperature at this refrigerant pressure, that is, a difference between the outlet temperature of the evaporator and the evaporation temperature.

When the air conditioning system 100 operates in the cooling mode, the opening of the indoor expansion valve 12 is less than the maximum opening. For example, if the maximum opening of the indoor expansion valve 12 is 200 Pls, the opening of the indoor expansion valve 12 is 10% of the maximum opening of the expansion valve in the cooling mode, that is, the opening of the indoor expansion valve 12 is 20 Pls. In this case, compared with the fully open state, the flow area of the refrigerant pipeline is reduced, the amount of refrigerant flowing into the indoor unit 10 through the connection pipe 70 is reduced. In order to avoid the liquid impact of the compressor 22, the opening of the indoor expansion valve 12 should not be larger than the first preset opening. In order to ensure that the recovery of the refrigerant at the connection pipe 70 is completed quickly, the opening of the indoor expansion valve 12 should not be smaller than the second preset opening. The first preset opening refers to an opening of the indoor expansion valve 12 that may cause the liquid-phase refrigerant to enter the compressor 22 without sufficiently evaporating. The second preset opening refers to an opening of the indoor expansion valve 12 which affects the refrigerant recovery rate at the connection pipe 70. The first preset opening is smaller than the second preset opening.

Therefore, in some embodiments of the present disclosure, the controller 40 may further adjust the opening of the indoor expansion valve 12 to a preset target opening according to the suction pressure value of the compressor 22.

It can be understood that, when the suction pressure value of the compressor 22 is higher than the preset suction pressure value, the amount of refrigerant in the indoor unit 10 is large, and the opening of the indoor expansion valve 12 remains unchanged. When the suction pressure is reduced, the retention amount of refrigerant in the indoor unit 10 is small, and the controller 40 increases the opening of the indoor expansion valve 12. A correspondence between the suction pressure value of the compressor 22 and the preset target opening of the indoor expansion valve 12 is stored in the memory 59. In some embodiments of the present disclosure, the value of the suction pressure value of the compressor 22 may have a negative correlation with the preset target opening of the indoor expansion valve 12.

For example, the correspondence between the suction pressure value of the compressor 22 and the preset target opening of the indoor expansion valve 12 may be as shown in Table 1.

**Table 1**

| Suction Pressure Value (Ps) | Preset Target Opening |
|---|---|
| 0.7>Ps≥0.6Mpa | 600pls |
| 0.6>Ps≥0.5Mpa | 800pls |
| 0.5>Ps≥0.4Mpa | 1100pls |
| 0.4>Ps≥0.3Mpa | 1500pls |
| 0.3>Ps≥0.2Mpa | 2000pls |

The controller 40 acquires the suction pressure value of the compressor 22 by means of the third pressure sensor 57, acquires a preset target opening of the indoor expansion valve 12 corresponding to the current suction pressure value from the memory 59 according to the suction pressure value, and controls the indoor expansion valve 12 to adjust to the preset target opening.

For example, if the controller 40 acquires that the suction pressure value of the compressor 22 is 0.5 Mpa by means of the third pressure sensor 57, it can be seen from Table 1 that the controller 40 adjusts the opening of the first expansion valve 101 to 800 pls to increase the circulation area of the pipeline. The retention amount of refrigerant in the connection pipe 70 is supplemented into the indoor unit 10, and then sucked into the outdoor unit 20 by using the compressor 22. After a period of time, the controller 40 obtains that the suction pressure value of the compressor 22 becomes 0.49 Mpa by means of the third pressure sensor 57, and adjusts the opening of the first expansion valve 101 to be 1100Pls according to Table 1. In this way, with the decrease of the suction pressure, the opening of the indoor expansion valve 12 is gradually increased, so that the refrigerant in the connection pipe 70 is recovered to the outdoor unit 20, and the amount of refrigerant in the connection pipe 70 is lower than the second preset threshold value, so as to ensure the usage reliability of the compressor 22.

It should be noted that, when the amount of refrigerant in the connection pipe 70 is lower than the second preset threshold, it is indicated that the refrigerant recovery at the connection pipe 70 is completed.

In some embodiments of the present disclosure, the controller 40 gradually increases the opening of the indoor expansion valve 12 until the opening of the indoor expansion valve 12 reaches the preset target opening.

For example, if the preset target opening of the indoor expansion valve 12 is 200 Pls, the controller 40 may increase the opening of the indoor expansion valve 12 at a speed of 20 Pls/s, and the adjustment time is 10s.

In some embodiments of the present disclosure, when the first expansion valve 101 and the indoor expansion valve 12 are opened, the controller 40 may further control the indoor fan assembly 13 to be turned on, avoiding liquid-phase refrigerant from entering the compressor 22 and causing a liquid impact, thereby affecting the reliability of the compressor 22.

In some embodiments of the present disclosure, the controller 40 may control the indoor fan assembly 13 to operate at a first preset speed.

In some embodiments of the present disclosure, when controlling the first expansion valve 101 and the indoor expansion valve 12 to be opened, the controller 40 may further control the outdoor fan assembly 25 to be opened, so that the refrigerant recovered in the refrigerant pipe 31 between the compressor 22 and the outdoor heat exchanger 23 flows to the liquid refrigerant pipe 32 between the outdoor heat exchanger 23 and the second expansion valve 102.

In some embodiments of the present disclosure, the controller 40 may control the outdoor fan assembly 25 to operate at a second preset speed.

In step S106, when it is determined that the compressor 22 again satisfies a first preset condition, controlling the compressor 22 to be stopped and controlling the first expansion valve 101 to be closed.

It can be understood that, after the indoor expansion valve 12 and the first expansion valve 101 are opened, the refrigerant flows into the gas refrigerant pipe 31 again, so that the compressor 22 does not satisfy the first preset condition any more.

Therefore, the controller 40 starts the compressor 22 and opens the first expansion valve 101 and the indoor expansion valve 12, so as to recover the refrigerant in the gas refrigerant pipe 31 at the indoor unit 10 to the outdoor unit 20. When the compressor 22 satisfies a first preset condition, it is indicated that the refrigerant in the gas refrigerant pipe 31 at the indoor unit 10 is completely recovered, and at this time, the controller 40 controls the compressor 22 to be stopped and controls the first expansion valve 101 to be closed, so as to prevent the refrigerant at the outdoor unit 20 from flowing back to the indoor unit 10.

In some embodiments of the present disclosure, after controlling the compressor 22 to be stopped, the controller 40 also controls the outdoor fan assembly 25 and indoor fan assembly 13 to be turned off.

S107, refrigerant recovery is completed.

The controller 40 controls the air conditioning system 100 to be in a N1-point state in FIG. 10 or a P-point state in FIG. 11. At this time, the compressor 22, the first expansion valve 101, the indoor expansion valve 12, and the second expansion valve 102 are all in a closed state.

By adopting the solutions of some embodiments of the present disclosure, it may be determined that the refrigerant leakage position is at the connection pipe 70 or at the indoor unit 10, and the refrigerant in the connection pipe 70 and the indoor unit 10 is recovered in time, thereby reducing the leakage amount of the refrigerant.

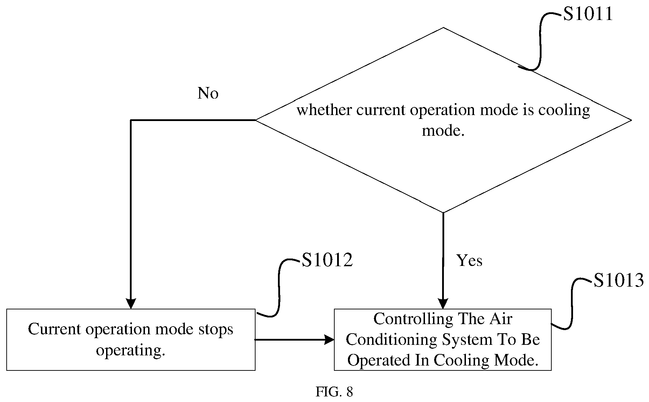

In some embodiments of the present disclosure, when the controller 40 acquires that the refrigerant leakage occurs indoors, the operation mode of the air conditioning system 100 may be a heating mode or the like. FIG. 8 is a flowchart of another refrigerant recovery method for an air conditioning system according to some embodiments. As shown in FIG. 8, S101 may include steps S1011 to S1013.

S1011: Determining whether a current operation mode of the air conditioning system 100 is a cooling mode. If yes, execute S1013. If not, execute S1012.

In some embodiments of the present disclosure, the controller 40 may acquire operation parameter information of the air conditioning system 100, for example, acquire a current operation mode of the air conditioning system 100, so as to determine whether the current air conditioning system 100 operates in the cooling mode.

In other embodiments of the present disclosure, the controller 40 may also determine the current operation mode according to the connection states of the four ports of the four-way valve 21 and the operation frequency of the compressor 22, so as to determine whether the current air conditioning system 100 operates in the cooling mode. For example, when the controller 40 acquires that the first port A of the four-way valve 21 is connected to the second port B and the third port C is connected to the fourth port D, it can be determined that the air conditioning system 100 operates in the cooling mode. When the controller 40 acquires that the first port A of the four-way valve 21 is connected to the fourth port D and the second port B is connected to the third port C, it can be determined that the air conditioning system 100 operates in the heating mode.

In S1012, the current operation mode stops operating.

The controller 40 controls the air conditioning system 100 to stop the current operation mode.

In S1013, controlling the air conditioning system 100 to be operated in a cooling mode.

When the controller 40 determines that the air conditioning system 100 operates in the cooling mode, there is no need to change the current operation mode of the air conditioning system 100. When the controller 40 determines that the air conditioning system 100 operates in the non-cooling mode, the controller 40 controls the air conditioning system 100 to adjust the operation mode to the cooling mode.

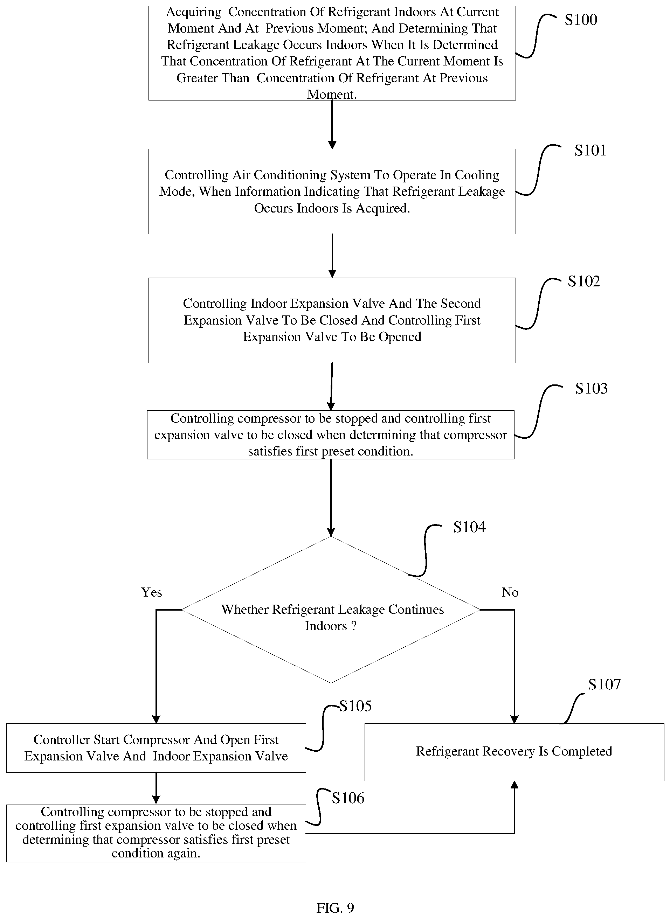

FIG. 9 is a flowchart of still another refrigerant recovery method for an air conditioning system according to some embodiments. As shown in FIG. 9, before step S101, the refrigerant recovery method for an air conditioning system 100 can further include S100.

In S100, acquiring the concentration of refrigerant indoors at a current moment and at a previous moment, and determining that the refrigerant leakage occurs indoors when it is determined that the concentration of refrigerant at the current moment is greater than the concentration of refrigerant at the previous moment.

The controller 40 acquires the concentration of refrigerant indoors by means of the first refrigerant concentration sensor 53, and determines whether the concentration of refrigerant indoors at the current moment is greater than the concentration of refrigerant indoors at the previous moment.

For example, if the concentration of refrigerant indoors at the current time is greater than the concentration of refrigerant indoors at the previous time, it is indicated that the refrigerant leakage occurs indoors. If the concentration of refrigerant indoors at the current time is lower than or equal to the concentration of refrigerant in indoors at the previous time, it is indicated that the refrigerant leakage does not occur indoors.

In some embodiments of the present disclosure, the controller 40 acquires the concentration of refrigerant indoors according to the refrigerant concentration sensor 54 at every preset interval, and the preset interval is between the current moment and the previous moment. The preset interval may be 5 s, 10 s, or 30 s, which is not limited in the present disclosure.

For example, if the preset interval is 30s, the controller 40 acquires the concentration of refrigerant indoors every 30s. It may be understood that, if the concentration of refrigerant at the current moment is smaller than or equal to the concentration of refrigerant at the previous moment, the controller 40 does not perform an action and may continue acquiring the concentration of refrigerant indoors at the current moment and at the previous moment.

In this way, the controller 40 may timely acquire information indicating that the refrigerant leakage occurs indoors, and timely recover the refrigerant, so as to reduce the refrigerant leakage indoors.

FIG. 10 is a diagram of an open or close state of each component in an air conditioning system according to some embodiments. As shown in FIG. 10, when the controller 40 acquires the information that the refrigerant leakage occurs, the controller 40 controls the compressor 22, the first expansion valve 101, the indoor expansion valve 12 and the second expansion valve 102 to be in the 0-point state, at this time, the compressor 22 is in an on state, the first expansion valve 101 is in an open state, the indoor expansion valve 12 is in a closed state, the second expansion valve 102 is in a closed state, so that the refrigerant leaked from the indoor unit 10 is started to be recovered to the outdoor unit 20. When the compressor 22 satisfies a first preset condition, the controller 40 controls the compressor 22, the first expansion valve 101, the indoor expansion valve 12 and the second expansion valve 102 to be in an M-point state. At this time, the recovery of the refrigerant at the indoor unit 10 is completed. Therefore, the compressor 22 is in an off state, the first expansion valve 101 is in a closed state, the indoor expansion valve 12 is in a closed state, and the second expansion valve 102 is in a closed state. When the controller 40 determines that the refrigerant leakage no longer occurs, it is indicated that the refrigerant leakage position is located at the indoor unit 10, and the recovery of the refrigerant leaked from the indoor unit 10 is completed. And the controller 40 controls the compressor 22, the first expansion valve 101, the indoor expansion valve 12 and the second expansion valve 102 to be in the N1-point state, at this time, the compressor 22 is in an off state, the first expansion valve 101 is in a closed state, and the indoor expansion valve 12 is in a closed state, and the second expansion valve 102 is in a closed state.

FIG. 11 is a diagram of an open or close state of each component in another air conditioning system according to some embodiments. Points 0 and M in FIG. 11 have the same meanings as points 0 and M in FIG. 10, which are not described herein again. Different from the diagram of the open or close state in FIG. 10, in FIG. 11, the controller 40 determines that the refrigerant leakage continues indoors, it is indicated that the refrigerant leakage position is located at the connection pipe 70, and the controller 40 controls the compressor 22, the first expansion valve 101, the indoor expansion valve 12 and the second expansion valve 102 to be in a N2-point state, at this time, the compressor 22 is in an on state, the first expansion valve 101 is in an open state, the indoor expansion valve 12 is in an open state, the second expansion valve 102 is in a closed state, and the refrigerant at the connection pipe 70 is recovered. When the compressor 22 again satisfies a first preset condition, the controller 40 controls the compressor 22, the first expansion valve 101, the indoor expansion valve 12 and the second expansion valve 102 to be in a P-point state, at this time, the recovery of the refrigerant at the connection pipe 70 is completed, the compressor 22 is in an off state, and the first expansion valve 101, the indoor expansion valve 12 and the second expansion valve 102 are all in a closed state. In some embodiments of the present disclosure, the indoor expansion valve 12 may also be in an open state at the point P.

It will be understood by those skilled in the art that the scope of the disclosure of the present application is not limited to the specific embodiments described above, and that certain elements of the embodiments may be modified and substituted without departing from the spirit of the present application. The scope of the present application is limited by the appended claims.

## Claims

1. An air conditioning system comprising:
an indoor unit comprising an indoor heat exchanger and an indoor expansion valve;
an outdoor unit comprising a compressor, the indoor unit being connected to the outdoor unit by a gas refrigerant pipe and a liquid refrigerant pipe, respectively;
a first expansion valve disposed on the gas refrigerant pipe between the indoor heat exchanger and the outdoor unit, and configured to control connection or disconnection of the gas refrigerant pipe between the indoor heat exchanger and the outdoor unit;
a second expansion valve disposed on the liquid refrigerant pipe between the outdoor unit and the indoor expansion valve, and configured to control connection or disconnection of the liquid refrigerant pipe between the outdoor unit and the indoor expansion valve; and
a controller configured to:
control the air conditioning system to operate in a cooling mode, control the indoor expansion valve and the second expansion valve to be closed and control the first expansion valve to be opened, when information indicating that a refrigerant leakage occurs indoors is acquired;
control the compressor to be stopped and control the first expansion valve to be closed, if the controller determines that the compressor satisfies a first preset condition;
start the compressor and open the first expansion valve and the indoor expansion valve, if the controller determines that the refrigerant leakage continues indoors after controlling the compressor to be stopped; and
control the compressor to be stopped and control the first expansion valve to be closed, if the controller determines that the compressor again satisfies the first preset condition.

2. The air conditioning system according to claim 1, further comprising:
a refrigerant concentration sensor configured to detect a concentration of refrigerant indoors;
wherein before acquiring the information indicating that the refrigerant leakage occurs indoors, the controller is further configured to:
acquire concentrations of refrigerant indoors at a current moment and at a previous moment, and determine that the refrigerant leakage occurs indoors if the controller determines that the concentration of refrigerant at the current moment is greater than the concentration of refrigerant at the previous moment.

3. The air conditioning system according to claim 1 or 2, further comprising a first pressure sensor arranged between the indoor expansion valve and the second expansion valve, wherein the first pressure sensor is configured to detect a pressure value at a connection pipe between the indoor expansion valve and the second expansion valve;
acquire pressure values at the connection pipe between the indoor expansion valve and the second expansion valve at a current moment and at a previous moment;
if the controller determines that the refrigerant leakage continues indoors, one of the following is comprised:
start the compressor and open the first expansion valve and the indoor expansion valve, if the controller determines that the pressure value at the connection pipe between the indoor expansion valve and the second expansion valve at the current moment is less than the pressure value at the previous moment; and
start the compressor and open the first expansion valve and the indoor expansion valve, if the controller determines that the concentration of refrigerant at the current moment is greater than the concentration of refrigerant at the previous moment.

4. The air conditioning system according to any one of claims 1 to 4, wherein the first preset condition comprises that an operation time of the compressor after being switched to the cooling mode is greater than a preset time.

5. The air conditioning system according to claim 4, further comprising:
a second pressure sensor configured to detect an exhaust pressure value of the compressor; and
a temperature sensor configured to detect an exhaust temperature value of the compressor;
wherein the first preset condition further comprises one of the following:
the exhaust pressure value of the compressor being greater than a first preset value; and
the exhaust temperature value of the compressor being greater than a second preset value.

6. The air conditioning system according to claim 4 or 5, further comprising a third pressure sensor configured to detect a suction pressure value of the compressor;
wherein the first preset condition further comprises that the suction pressure value of the compressor is less than a third preset value.

7. The air conditioning system according to any one of claims 1 to 6, wherein the indoor expansion valve is an indoor electronic expansion valve;
the air conditioning system further comprises a third pressure sensor configured to detect the suction pressure value of the compressor; and
wherein the starting the compressor and opening the first expansion valve and the indoor expansion valve further comprises:
adjusting the indoor expansion valve to preset target opening according to the suction pressure value of the compressor.

8. The air conditioning system according to claim 7, further comprising a memory storing a correspondence between the suction pressure value and the preset target opening of the indoor expansion valve;
wherein the adjusting the indoor expansion valve to the preset target opening according to the suction pressure value of the compressor comprises:
acquiring a current suction pressure value of the compressor by the third pressure sensor;
acquiring a preset target opening of the indoor expansion valve corresponding to the current suction pressure value from the memory; and
controlling the indoor expansion valve to adjust to the preset target opening.

9. The air conditioning system according to any one of claims 1 to 8, further comprising:
an outdoor fan assembly disposed in the outdoor unit and configured to blow air to an outdoor heat exchanger; and
an indoor fan assembly disposed in the indoor unit and configured to blow air to the indoor heat exchanger;
wherein when controlling the indoor expansion valve and the second expansion valve to be closed, the controller is further configured to:
control the outdoor fan assembly and the indoor fan assembly to be turned on;
wherein the controlling the indoor fan assembly to be turned on comprises: controlling the indoor fan assembly to operate at a first preset speed; and
wherein the controlling the outdoor fan assembly to be turned on comprises: controlling the outdoor fan assembly to operate at a second preset speed.

10. The air conditioning system according to any one of claims 1 to 9, further comprising:
an outdoor fan assembly disposed in the outdoor unit and configured to blow air to an outdoor heat exchanger; and
an indoor fan assembly disposed in the indoor unit and configured to blow air to the indoor heat exchanger;
wherein after the controlling the compressor to be stopped, the controller is further configured to:
control the outdoor fan assembly and the indoor fan assembly to be turned off;
wherein the controlling the indoor fan assembly to be turned on comprises: controlling the indoor fan assembly to operate at a first preset speed; and
wherein the controlling the outdoor fan assembly to be turned on comprises: controlling the outdoor fan assembly to operate at a second preset speed.

11. The air conditioning system according to any one of claims 1 to 10, further comprising:
an outdoor fan assembly disposed in the outdoor unit and configured to blow air to an outdoor heat exchanger; and
an indoor fan assembly disposed in the indoor unit and configured to blow air to the indoor heat exchanger;
wherein when the first expansion valve and the indoor expansion valve are opened, the controller is further configured to:
control the outdoor fan assembly and the indoor fan assembly to be turned on;
wherein the controlling the indoor fan assembly to be turned on comprises: controlling the indoor fan assembly to operate at a first preset speed; and
wherein the controlling the outdoor fan assembly to be turned on comprises: controlling the outdoor fan assembly to operate at a second preset speed.

12. A control method for an air conditioning system, wherein the air conditioning system comprises:
an indoor unit comprising an indoor heat exchanger and an indoor expansion valve;
an outdoor unit comprising a compressor, the indoor unit being connected to the outdoor unit by means of a gas refrigerant pipe and a liquid refrigerant pipe, respectively;
a first expansion valve disposed on the gas refrigerant pipe between the indoor heat exchanger and the outdoor unit, and configured to control connection or disconnection of the gas refrigerant pipe between the indoor heat exchanger and the outdoor unit;
a second expansion valve disposed on the liquid refrigerant pipe between the outdoor unit and the indoor expansion valve, and configured to control connection or disconnection of the liquid refrigerant pipe between the outdoor unit and the indoor expansion valve; and
a refrigerant concentration sensor configured to detect a concentration of refrigerant indoors;
a controller coupled to the indoor heat exchanger, the outdoor heat exchanger, the compressor, the first expansion valve, the second expansion valve and the refrigerant concentration sensor;
wherein the control method comprises:
acquiring concentrations of refrigerant indoors at a current moment and at a previous moment; and determining that refrigerant leakage occurs indoors if determining that the concentration of refrigerant at the current moment is greater than the concentration of refrigerant at the previous moment;
controlling the air conditioning system to operate in a cooling mode, controlling the indoor expansion valve and the second expansion valve to be closed and controlling the first expansion valve to be opened, when information indicating that the refrigerant leakage occurs indoors is acquired;
controlling the compressor to be stopped and controlling the first expansion valve to be closed, if determining that the compressor satisfies a first preset condition;
starting the compressor and opening the first expansion valve and the indoor expansion valve, if determining that the refrigerant leakage continues indoors after controlling the compressor to be stopped; and
controlling the compressor to be stopped and controlling the first expansion valve to be closed, if determining that the compressor again satisfies the first preset condition.

13. The control method according to claim 12, wherein the air conditioning system further comprises a first pressure sensor arranged between the indoor expansion valve and the second expansion valve, wherein the first pressure sensor is configured to detect a pressure value at a connection pipe between the indoor expansion valve and the second expansion valve and
acquiring pressure values at the connection pipe between the indoor expansion valve and the second expansion valve at a current moment and at a previous moment;
wherein if determining whether the refrigerant leakage continues indoors, one of the following is comprised:
starting the compressor and opening the first expansion valve and the indoor expansion valve, if determining that the pressure value at the connection pipe between the indoor expansion valve and the second expansion valve at the current moment is less than the pressure value at the previous moment; and
starting the compressor and opening the first expansion valve and the indoor expansion valve, if determining that the concentration of refrigerant at the current moment is greater than the concentration of refrigerant at the previous moment.

14. The control method according to claim 12 or 13, wherein the first preset condition comprises that an operation time of the compressor after being switched to a cooling mode is greater than a preset time.

15. The control method according to claim 14, wherein the air conditioning system further comprises:
a second pressure sensor configured to detect an exhaust pressure value of the compressor; and
a temperature sensor configured to detect an exhaust temperature value of the compressor;
wherein the first preset condition further comprises one of the following:
the exhaust pressure value of the compressor being greater than a first preset value; and
the exhaust temperature value of the compressor being greater than a second preset value.

16. The control method according to claim 14 or 15, wherein the air conditioning system further comprises a third pressure sensor configured to detect a suction pressure value of the compressor; and
wherein the first preset condition further comprises that the suction pressure value of the compressor is less than a third preset value.

17. The control method according to any one of claims 12 to 16, wherein the indoor expansion valve is an indoor electronic expansion valve;
wherein the air conditioning system further comprises a third pressure sensor configured to detect the suction pressure value of the compressor; and
wherein the starting the compressor and opening the first expansion valve and the indoor expansion valve further comprises:
adjusting the indoor expansion valve to preset target opening according to the suction pressure value of the compressor.

18. The control method according to claim 17, wherein the air conditioning system further comprises a memory storing a correspondence between the suction pressure value and the preset target opening of the indoor expansion valve;
wherein the adjusting the indoor expansion valve to the preset target opening according to the suction pressure value of the compressor comprises:
acquiring a current suction pressure value of the compressor by the third pressure sensor;
acquiring a preset target opening of the indoor expansion valve corresponding to the current suction pressure value from the memory; and
controlling the indoor expansion valve to adjust to the preset target opening.

19. The control method according to any one of claims 12 to 18, wherein the air conditioning system further comprises:
an outdoor fan assembly disposed in the outdoor unit and configured to blow air to an outdoor heat exchanger; and
an indoor fan assembly disposed in the indoor unit and configured to blow air to an indoor heat exchanger;
wherein the control method further comprises at least one of:
controlling the outdoor fan assembly and the indoor fan assembly to be turned on when controlling the indoor expansion valve and the second expansion valve to be closed;
controlling the outdoor fan assembly and the indoor fan assembly to be turned off after controlling the compressor to be stopped; or
controlling the outdoor fan assembly and the indoor fan assembly to be turned on when opening the first expansion valve and the indoor expansion valve;
wherein the controlling the indoor fan assembly to be turned on comprises: controlling the indoor fan assembly to operate at a first preset speed; and
wherein the controlling the outdoor fan assembly to be turned on comprises: controlling the outdoor fan assembly to operate at a second preset speed.
